# EUROPEAN PATENT APPLICATION

(11) **EP 4 693 199 A1**
(43) Date of publication of application: **11.02.2026**
(21) Application number: 24777800.4
(22) Date of filing: 19.03.2024
(51) Int. Cl.: G06T 11/60

(54) **IMAGE PROCESSING METHOD AND APPARATUS, DEVICE, COMPUTER-READABLE STORAGE MEDIUM, AND PRODUCT**

(30) Priority: 31.03.2023 CN 202310342564
(71) Applicant: Beijing Zitiao Network Technology Co., Ltd., Beijing 100190 (CN)
(72) Inventor: LIAO, Yunhao, Beijing 100028 (CN); TENG, Huaihong, Beijing 100028 (CN); WEI, Zheng, Beijing 100028 (CN); LU, Zhixiong, Beijing 100028 (CN)
(74) Representative: Isarpatent
(86) International application number: PCT/CN2024/082468
(87) International publication number: WO 2024/199011

(57) **Abstract**

The embodiments of the present disclosure provide an image processing method and apparatus, device, computer-readable storage medium, and product, and the method includes: acquiring a first image with a first preset size in response to an image processing operation triggered by a user; adjusting a size of the first image to a second preset size matched with a preset image processing algorithm to obtain a second image; performing the image processing operation on the second image based on the image processing algorithm to obtain a third image; adjusting a size of the third image to the first preset size to obtain a target image; and rendering a gradient switching effect of switching from the first image to the target image on a rendering canvas with the first preset size.

## Description

### CROSS REFERENCE TO RELATED APPLICATIONS

The present application is based on and claims priority from CN Patent Application No. 202310342564.2 filed on March 31, 2023, the disclosure of which is incorporated by reference herein in its entirety.

### TECHNICAL FIELD

Embodiments of the present disclosure relate to the field of image processing technologies, and in particular, to an image processing method and apparatus, a device, a computer-readable storage medium, and a product.

### BACKGROUND

The current user can perform an image editing operation on the application software. For example, the user-generated image may be converted into a caricature-effect image in response to an editing operation triggered by the user.

As an implementation mode, the image generated by the user can be uploaded to the cloud server to be subjected to image processing operation, and then the image processing result fed back by the cloud server is obtained for display.

### SUMMARY

This disclosure provides an image processing method and apparatus, device, computer-readable storage medium, and product.

In one aspect, the embodiment of the present disclosure provides an image processing method and the method includes:
acquiring a first image with a first preset size in response to an image processing operation triggered by a user;
adjusting a size of the first image to a second preset size matched with a preset image processing algorithm to obtain a second image;
performing the image processing operation on the second image based on the image processing algorithm to obtain a third image;
adjusting a size of the third image to the first preset size to obtain a target image; and
rendering a gradient switching effect of switching from the first image to the target image on a rendering canvas with the first preset size.

In another aspect, the embodiment of the present disclosure provides an image processing apparatus including:
an acquisition module configured to acquire a first image with a first preset size in response to an image processing operation triggered by a user;
an editing module configured to adjust a size of the first image to a second preset size matched with a preset image processing algorithm to obtain a second image;
a processing module configured to perform the image processing operation on the second image based on the image processing algorithm to obtain a third image;
an adjusting module configured to adjust a size of the third image to the first preset size to obtain a target image; and
a switching module configured to render a gradient switching effect of switching from the first image to the target image on a rendering canvas with the first preset size.

In another aspect, the embodiment of the present disclosure provides an electronic device, including: processor and a memory;
the memory stores computer execution instructions;
the processor executes the computer-executable instructions stored by the memory to cause the processor to implement the image processing method as described in the above aspect and various possible designs in this aspect.

In another aspect, the embodiment of the present disclosure provides a computer-readable storage medium and the computer-readable storage medium has stored therein computer-executable instructions which, when executed by a processor, implement the image processing method as described in the above aspect and various possible designs in this aspect.

In another aspect, the embodiment of the present disclosure provides a computer program product and the computer program product includes a computer program, and the computer program when executed by a processor implements the image processing method as described in the above aspect and various possible designs in this aspect.

### BRIEF DESCRIPTION OF THE DRAWINGS

In order to more clearly illustrate the embodiments of the present disclosure or technical solutions in related arts, the drawings used in the description of the embodiments or related arts will be briefly described below, and it is obvious that the drawings in the description below are some embodiments of the present disclosure, and for those skilled in the art, other drawings can be obtained according to the drawings without creative efforts.
Fig. 1 is a schematic flowchart of an image processing method according to an embodiment of the present disclosure;
Fig. 2 is a schematic view of an application scenario provided by an embodiment of the present disclosure;
Fig. 3 is a schematic flowchart of an image processing method according to another embodiment of the present disclosure;
Fig. 4 is a schematic diagram illustrating a cropping adjustment mode according to an embodiment of the present disclosure;
Fig. 5 is a schematic diagram illustrating a filling adjustment mode according to an embodiment of the present disclosure;
Fig. 6 is a schematic flowchart of an image processing method according to another embodiment of the present disclosure;
Fig. 7 is a schematic flowchart of an image processing method according to another embodiment of the present disclosure;
Fig. 8 is a schematic structural diagram of an image processing apparatus according to an embodiment of the present disclosure;
Fig. 9 is a schematic structural diagram of an electronic device according to an embodiment of the present disclosure.

### DETAILED DESCRIPTION

To make the objects, technical solutions and advantages of the embodiments of the present disclosure more apparent, the technical solutions in the embodiments of the present disclosure will be described clearly and completely with reference to the drawings in the embodiments of the present disclosure, and it is obvious that the described embodiments are some, but not all embodiments of the present disclosure. All other embodiments, which can be derived by a person skilled in the art from the embodiments disclosed herein without inventive step, are intended to be within the scope of the present disclosure.

In order to solve the technical problem that the display effect is poor when the processing result fed back by the cloud server is displayed, the present disclosure provides an image processing method and apparatus, a device, a computer-readable storage medium and product.

It should be noted that the image processing method and apparatus, device, computer-readable storage medium, and product provided by the present disclosure may be applied to any image processing scene that requires terminal-cloud cooperation.

When the cloud server is adopted for image processing, an algorithm used by the cloud server for processing the image can only perform image processing operation on the image with a specified size, and the specified size is different from the rendering canvas size of the terminal device. Therefore, after the processed target image sent by the cloud server is obtained, the target image is displayed on the terminal device, and stretching or jumping of the image may occur, so that the display effect is poor, and the use experience of a user is influenced.

In the process of solving the technical problem, the inventor finds, through research, that in order to avoid jumping and stretching of the image occurring when the target image is displayed, preset pixels can be added around the image to be processed before the image to be processed is sent to the cloud server for image processing, and the image to be processed is adjusted to be the image with the specified size capable of being processed by the cloud server. After the target image fed back by the cloud server is obtained, the preset pixels in the target image are cropped, and therefore the image to be displayed, which is consistent with the size of the rendering canvas, can be obtained. The image to be displayed corresponds to the pixels in the image to be processed one by one, so that jumping and stretching can not occur when the displaying effect is switched, and the display effect of the image is optimized.

The system architecture on which the present disclosure is based includes at least a terminal device and a server. The terminal device is in communication connection with the server. The terminal device can acquire a first image generated by a user, adds preset pixels to the edge of the first image, and edits the first image into a second image with a second preset size. The second image is sent to a server so that the server performs image processing operation on the second image. Further, the terminal device may obtain a third image fed back by the server, and perform a cropping operation on a preset pixel in the third image to obtain a target image. A gradient switching effect of switching from the first image to the target image is rendered on the rendering canvas with the first preset size.

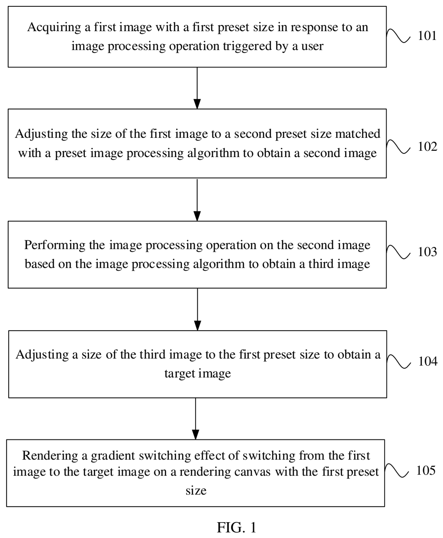

Fig. 1 is a schematic flowchart of an image processing method according to an embodiment of the present disclosure, and as shown in Fig. 1, the method includes:
step 101, acquiring a first image with a first preset size in response to an image processing operation triggered by a user.

In this embodiment, the user may trigger the image processing operation according to actual requirements. The image processing operation may be an image beautification operation, a face beautification operation, an operation for transforming image style, and other image processing operations. For example, a user may convert a user-generated image into a caricature-style image by triggering an image processing operation.

Optionally, a plurality of different image processing types may be displayed on the terminal device, and the user may trigger the image processing operation by triggering the image processing type.

In response to an image processing request triggered by the user, a first image of a first preset size may be acquired. The first preset size may be a renderable size of the rendering canvas. For example, the first predetermined size may be 9: 16.

The user may directly generate an original image of the first preset size, and determine the original image as the first image. Alternatively, the user may generate an original image of an arbitrary size, and adjust the original image to the first image of the first preset size.

Step 102, adjusting the size of the first image to a second preset size matched with a preset image processing algorithm to obtain a second image.

In this embodiment, a preset image processing algorithm may be used to implement the image processing operation on the first image. The image processing algorithm may perform an image processing operation on the image of the second preset size. The second preset size that the image processing algorithm can process is generally any size that is a multiple of 64. The image size that the image processing algorithm can process may be different from the first preset size. Therefore, in order to enable the image processing operation, the size of the first image may be adjusted to the second preset size matching a preset image processing algorithm to obtain the second image.

For example, the first predetermined size may be 9:16, and the image size that the image processing algorithm can process may be 768 × 1280. Therefore, to implement the image processing operation, the first image of the first preset size may be adjusted to 768 × 1280.

It should be noted that the image processing algorithm may be coupled to the terminal device, so that the image processing operation can be directly implemented in the terminal device. Or, the image processing algorithm may also be coupled to a preset image processing side, so that the terminal device may send the second image to the image processing side for image processing operation.

Step 103, performing the image processing operation on the second image based on the image processing algorithm to obtain a third image.

In this embodiment, after the first image is edited into the second image of the second preset size, an image processing operation may be performed based on the second image to obtain a third image.

In the above example, if the image processing algorithm is coupled to the image processing side, the second image may be sent to the image processing side for image processing operation, so as to obtain a third image. Or, if the image processing algorithm is coupled to the terminal device, the image processing operation may be directly performed on the terminal device to obtain the third image. The present disclosure is not so limited.

Step 104, adjusting a size of the third image to the first preset size to obtain a target image.

In this embodiment, after the third image is acquired, the third image needs to be rendered on the rendering canvas so that the third image can be viewed by the user. However, since the size of the third image is the same as the size of the second image, it is the second preset size. That is, the third image has different size from the first preset size of the rendering canvas, and stretching or jumping of the image may occur when the third image is directly rendered, resulting in poor display effect. Therefore, the third image of the second preset size needs to be adjusted to the target image of the first preset size.

Step 105, rendering a gradient switching effect of switching from the first image to the target image on a rendering canvas with the first preset size.

In this embodiment, after the target image of the first preset size is obtained, the target image may be rendered on a rendering canvas of the first preset size, so that the user views the result after the image processing.

As an implementable mode, the gradient switching effect of switching from the first image to the target image can be rendered on the rendering canvas with the first preset size, so that the display effect of the target image can be improved, and the user experience is improved.

In the image processing method provided in this embodiment, after a first image with a first preset size is obtained, the first image is adjusted to a second preset size matched with a preset image processing side, so as to obtain a second image. The image processing operation is performed on the second image with the second preset size to obtain a third image. The third image is adjusted into a target image matched with the pixel position in the first image. A gradient switching effect of switching from the first image to the target image is rendered. By rendering the gradient switching effect of switching from the first image to the target image, the display effect in the display interface can be optimized. In addition, because the pixels in the first image and the target image are in one-to-one correspondence, and the first image and the target image have the same size, jumping and stretching will not occur when the displaying effect is switched, and the display effect of the images is optimized.

As a practical implementation manner, on the basis of any of the foregoing embodiments, the step 102 includes:
editing the first image into the second image with the second preset size by adding preset pixels at an edge of the first image; and
the step 104 includes:
   performing cropping operation on preset pixels in the third image to obtain the target image

In this embodiment, in order to enable an image processing operation on the first image by a preset image processing algorithm, the size of the first image may be adjusted to a second preset size matching the image processing algorithm.

To realize the size adjusting operation on the first image, the preset pixels may be set in advance. The predetermined pixel may be a pixel of a predetermined color and/or a predetermined texture. After the first image is acquired, preset pixels can be added to the edge of the first image, and the first image can be edited into a second image with a second preset size.

As an implementation manner, preset pixels of different colors and different textures may be preset. After the first image is acquired, the preset pixels matched with the first image can be selected according to the image characteristics of the first image to perform the filling operation on the first image, and the image characteristics include but are not limited to the tone and texture of the first image, the type of the object in the first image, and the like. For example, if the first image is a darker-tone image, the first image may be filled with black predetermined pixels. If the object type in the first image is a relatively cute type such as a pet, the preset pixels including relatively cute textures can be selected to perform filling operation on the first image.

As an implementation manner, after the first image is filled with the preset pixels, the display position, the coverage range and the second image of the preset pixels in the second image may also be sent to the image processing algorithm at the same time. Therefore, the image processing algorithm can perform image processing on the effective image content other than the preset pixel in the second image based on the display position and the coverage range of the preset pixel, to facilitate the saving of the computing power of the image processing algorithm, and a better image processing effect is obtained.

Optionally, the preset pixel may be specifically a redundant pixel, for example, a black pixel, and after the first image is filled with the redundant pixel, an effect of a black border can be presented around the first image. When the current preset pixel is a redundant pixel, the redundant pixel does not include any information. Therefore, after the first image is filled by the redundant pixels, in the process of image processing the second image by the image processing algorithm, because no information exists in the redundant pixels, the content of the region of the redundant pixel does not need to be processed in the image processing process, the calculation amount of the image processing algorithm is reduced, and the efficiency of the image processing is improved.

As an implementation manner, after the first image is filled with the preset pixels, the display position, the coverage range of the preset pixels in the second image and the second image may also be sent to the image processing algorithm at the same time. Therefore, the image processing algorithm can perform image processing on the effective image content other than the preset pixel in the second image based on the display position and the coverage range of the preset pixel, to facilitate the saving of the computing power of the image processing algorithm, and a better image processing effect is obtained.

For example, the first image may be filled with black preset pixels (black borders). The first preset size may be 9:16, and the image size that the image processing algorithm can process may be 768 × 1280. Therefore, to implement the image processing operation, a black border may be filled around the first image of the first preset size, converting the 9:16 first image to a 768 × 1280 second image.

Further, after the third image is acquired after the processing by the preset image processing algorithm, the third image needs to be rendered on the rendering canvas so that the third image can be viewed by the user. However, since the size of the third image is different from the first preset size corresponding to the rendering canvas, stretching or jumping of the image may occur when the third image is directly rendered, resulting in a poor display effect. Therefore, the third image of the second preset size needs to be adjusted to the first preset size.

As an implementation manner, the third image may be cropped to obtain the target image with the first preset size. Since the third image is obtained by image processing based on the second image filled with the preset pixels, the third image also includes the same preset pixels as the second image. Therefore, the preset pixels in the third image can be directly subjected to the cropping operation, and the target image can be obtained. By cropping the preset pixels, the target image with the first preset size can be obtained. In addition, effective pixels in the target image will not be cropped and damaged, and the image quality of the target image is guaranteed.

In the image processing method provided by this embodiment, a filling operation is performed on the first image by using the preset pixels, so as to obtain the second image with the second preset size. After image processing is performed on the basis of the second image, the third image including the preset pixels can be obtained. After the third image is obtained, a target image matched with the pixel position in the first image can be obtained by performing cropping operation on the preset pixel at the edge of the third image. Therefore, in the subsequent rendering process, because the size of the first image is the same as that of the target image, and the pixels are not cropped in the image processing process, the pixels in the first image and the target image are in one-to-one correspondence. Therefore, when the gradient switching effect is rendered, jumping and stretching will not occur, and the display effect of the image is optimized.

As an implementation manner, if the first preset size is larger than the second preset size, the first image needs to be cropped to obtain the second image with the second preset size. The image processing operation is performed on the second image by a preset image processing algorithm to obtain the third image with the preset size. The third image is filled with the preset pixels to obtain the target image with the first preset size.

Through the above processing, the image processing algorithm can realize the processing operation on the second image, and in addition, as the size of the target image is the same as that of the first image, jumping and stretching will not occur when the gradient switching effect is rendered.

Further, on the basis of any of the above embodiments, the step 103 includes:
performing feature recognition operation on the second image to obtain feature information corresponding to the second image;
sending the second image and the feature information to an image processing side to cause the image processing side to perform image processing on the second image by adopting the image processing algorithm based on the feature information; and
acquiring the third image sent by the image processing side.

In this embodiment, in order to reduce the calculation amount of the terminal device, an image processing operation may be performed on an image processing side, an image processing algorithm is previously set on the image processing side, and the image processing algorithm may perform the image processing operation on an image of a second preset size. Therefore, the second image can be sent to the image processing side for image processing operation, and a third image fed back by the server is obtained.

Further, in order to enable the image processing side to achieve a better image processing effect, before the second image is sent, a feature recognition operation may be performed on the second image to obtain feature information corresponding to the second image. For example, the gender of the user, the location, and the key point included in the second image may be identified to obtain the feature information. The second image and the characteristic information is sent to a preset image processing side so that the image processing side performs image processing on the second image by adopting the image processing algorithm based on the characteristic information to obtain a third image. By sending the feature information, the processing accuracy of the image processing side can be improved. Further, the third image sent by the image processing side can be acquired.

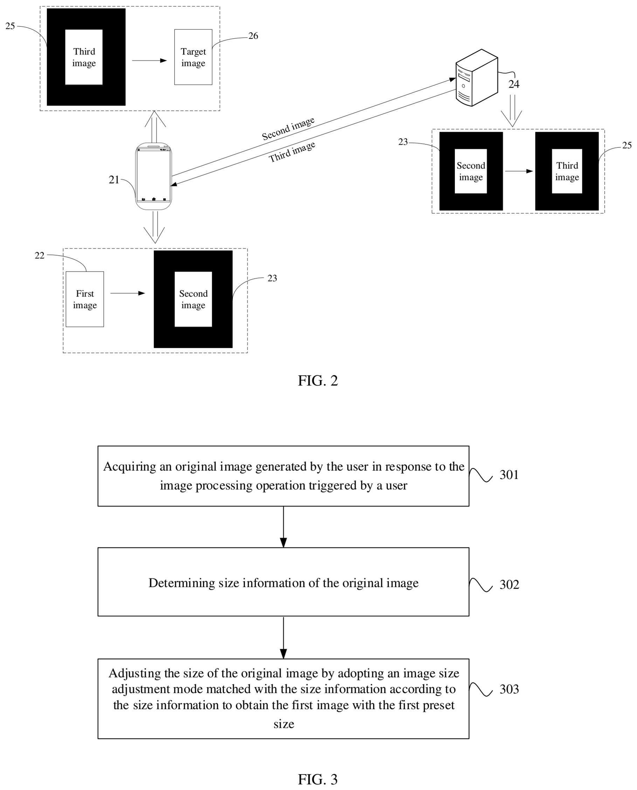

Fig. 2 is a schematic view of an application scenario provided by the embodiment of the present disclosure, and as shown in Fig. 2, a terminal device 21 may obtain a first image 22 with a first preset size, add preset pixels around the first image 22, and obtain a second image 23 with a second preset size. The second image 23 is sent to the server 24, so that the server 24 performs an image processing operation on the second image to obtain a third image 25, where the third image 25 also includes preset pixels. The third image 25 fed back by the server 24 is acquired, and cropping operation is performed on the preset pixels in the third image 25 to obtain a target image 26. Thereby a gradient switching effect of switching from the first image to the target image can be rendered.

According to the image processing method provided by the embodiment, the image processing operation is performed on the cloud server, so that the calculation pressure on the terminal can be effectively reduced and the lagging phenomenon of the terminal can be avoided under the condition that the image processing effect is ensured.

Fig. 3 is a schematic flowchart of an image processing method according to another embodiment of the present disclosure, and based on any one of the foregoing embodiments, as shown in Fig. 3, the step 101 includes:
step 301, acquiring an original image generated by the user in response to the image processing operation triggered by a user;
step 302, determining size information of the original image; and
step 303, adjusting the size of the original image by adopting an image size adjustment mode matched with the size information according to the size information to obtain the first image with the first preset size.

In this embodiment, the user can generate an original image. The original image can be captured by the user in real time, and can also be selected and uploaded in a preset storage path for the user. The size of the original image may be the same as the rendering canvas, or may be any size.

When the size of the original image is different from the rendering canvas size, the size of the original image may be adjusted to a first image of a first preset size. Conversely, when the size of the original image is the same as the rendering canvas size, the original image may be directly determined as the first image of the first preset size.

Optionally, in response to an image processing operation triggered by the user, the user-generated original image is acquired. Size information of the original image is determined. For different size information, different size adjustment modes can be selected to adjust the size of the original image.

After the size information of the original image is determined, the size of the original image can be adjusted by adopting an image size adjustment mode matched with the size information according to the size information, and the first image with the first preset size is obtained.

In the image processing method provided by this embodiment, after the original image is obtained, when the size of the original image is different from the size of the rendering canvas, the original image is converted into the first image with the first preset size by adopting a size adjustment mode matched with the size of the original image. Therefore, when the original image is displayed on the terminal device, the size of the adjusted first image is the same as that of the rendering canvas, and the phenomena of image deformation, jumping and the like in the display of the original image are avoided.

Optionally, on the basis of any of the foregoing embodiments, the step 303 includes:
if the size information is smaller than a preset target size threshold, adjusting the size of the original image in a cropping mode to obtain the first image with the first preset size; and
if the size information is larger than the preset target size threshold, adjusting the size of the original image in a filling mode to obtain the first image with the first preset size.

In the present embodiment, two different size adjustment modes for the image may be set in advance: a cropping mode and a filling mode. In the filling mode, fitheight/fitwidth can be automatically selected, asserting that from the input image to the result image, no pixels are cropped, but there may be a black border. In the cropping mode, fitheight/fitwidth can be automatically selected, asserting that from the input image to the result image, no preset pixel (black border) is filled in, but cropping may occur.

Therefore, after the size of the original image is determined, if the size information is detected to be smaller than the preset target size threshold, the size of the original image is adjusted by adopting the cropping mode, and the first image with the first preset size is obtained. If the detected size information is larger than the preset target size threshold, the size of the original image is adjusted in the filling mode to obtain the first image with the first preset size.

Further, on the basis of any one of the above embodiments, the adjusting the size of the original image in a cropping mode to obtain the first image with the first preset size includes:
stretching a width or a height of the original image to a width or a height matched with the target size threshold value to obtain a stretched original image; and
performing cropping operation on the height or the width of the stretched original image, which is not matched with the target size threshold value, to obtain the first image with the first preset size

In this embodiment, in the cropping mode, the original image after stretching may be obtained by stretching the width or height of the original image to a width or height that matches the target size threshold. The height or width part which is not matched with the target size threshold value in the stretched original image is cropped to obtain the first image with the first preset size.

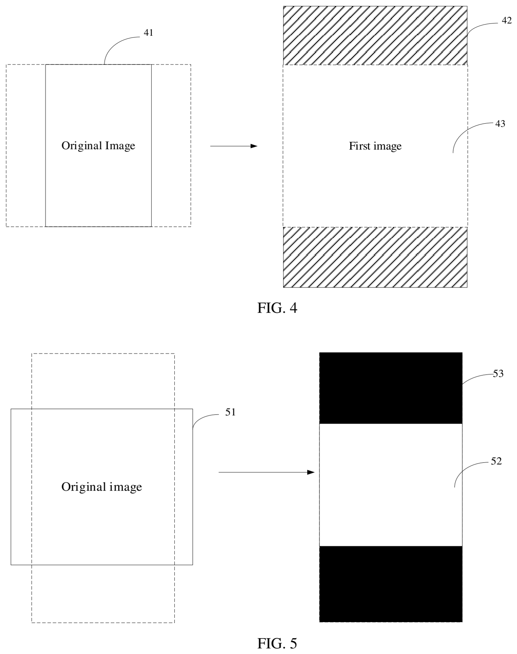

Fig. 4 is a schematic diagram of a cropping adjustment mode provided by the embodiment of the present disclosure, and as shown in Fig. 4, if the size information of the original image 41 is smaller than the preset target size threshold, the width of the original image 41 may be stretched to a width matching the target size threshold, so as to obtain a stretched original image 42. The cropping operation on a height area, which does not match the target size threshold, in the stretched original image 42 is performed to obtain the first image 43 of the first preset size.

Further, on the basis of any one of the above embodiments, the adjusting the size of the original image in a filling mode to obtain the first image with the first preset size includes:
stretching the width or the height of the original image to the width or the height matched with the target size threshold value to obtain a stretched original image; and
filling part of the height or the width which is not matched with the target size threshold value in the stretched original image by preset pixels to obtain the first image with the first preset size.

In this embodiment, in the filling mode, the original image may be stretched to a width or a height matching the target size threshold, so as to obtain a stretched original image. The height or width part which is not matched with the target size threshold value in the stretched original image is filled with the preset pixels to obtain the first image with the first preset size. For example, a black border may be filled in the height or width portion of the original image after stretching that does not match the target size threshold, resulting in the first image.

The preset pixel may be a pixel of a preset color and/or a preset texture preset by a user.

Fig. 5 is a schematic diagram of a filling adjustment mode provided by the embodiment of the present disclosure, and as shown in Fig. 5, if the size information of the original image 51 is greater than the preset target size threshold, the width of the original image 51 may be stretched to a width matching the target size threshold, so as to obtain a stretched original image 52. A filling operation is performed on a height or width portion of the stretched original image 52 that does not match the target size threshold by using a preset pixel, so as to obtain a first image 53 with a first preset size, where the preset pixel may specifically be a black pixel and is displayed in the form of a black border.

According to the image processing method provided by the embodiment, the sizes of the original images with different sizes are adjusted in different modes, so that the sizes of the original images with different sizes can be accurately adjusted, and the original images with different sizes can be normally displayed.

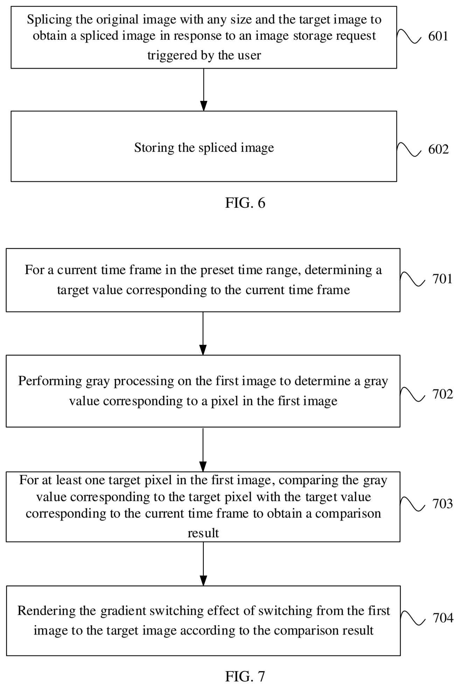

Fig. 6 is a schematic flowchart of an image processing method according to still another embodiment of the present disclosure, and based on any one of the foregoing embodiments, as shown in Fig. 6, after step 105, the method further includes:
step 601, splicing the original image with any size and the target image to obtain a spliced image in response to an image storage request triggered by the user; and
step 602, storing the spliced image.

In this embodiment, after the first image is subjected to the image processing to obtain the target image, the user may trigger an image saving request. In response to the image saving request, the original image of any size and the target image can be spliced to obtain a spliced image, and the spliced image is saved.

Further, on the basis of any of the above embodiments, step 601 includes:
if the first preset size of the original image is smaller than a preset size proportion, transversely splicing the original image and the target image to obtain the spliced image; and
if the first preset size of the original image is larger than the preset size proportion, respectively performing cropping operation on the original image and the target image according to the preset size proportion, and longitudinally splicing the cropped original image and the target image to obtain the spliced image.

In this embodiment, since the sizes of the original image and the target image may be different, different stitching methods may be adopted for the original images with different sizes to perform stitching processing.

Optionally, if the first preset size of the original image is smaller than the preset size ratio, a transverse splicing mode may be selected for splicing. The original image and the target image can be transversely spliced to obtain a spliced image. If the first preset size of the original image is larger than the preset size proportion, the splicing operation can be performed in a longitudinal splicing mode. The original image and the target image can be cropped according to the preset size proportion, and the cropped original image and the cropped target image are longitudinally spliced to obtain a spliced image.

According to the image processing method provided by the embodiment, the image splicing operation is performed in different modes based on the size of the original image by responding to the image storage request triggered by the user, so that the image quality of the spliced image can be improved, and the user experience is improved.

Further, on the basis of any of the above embodiments, the step 105 includes:
rendering the gradient switching effect of switching from the first image to the target image on the rendering canvas with the first preset size in a preset time range.

In this embodiment, the time range may be set in advance, for example, the time range may be one second. Alternatively, the time range may be set according to the actual requirement of the user, which is not limited by the present disclosure.

After the time range is determined, the gradient switching effect of switching from the first image to the target image can be rendered on the rendering canvas with the first preset size in the preset time range.

Fig. 7 is a flowchart of an image processing method according to yet another embodiment of the present disclosure, where on the basis of any one of the above embodiments, as shown in Fig. 7, the rendering the gradient switching effect of switching from the first image to the target image on the rendering canvas with the first preset size in a preset time range includes:
step 701, for a current time frame in the preset time range, determining a target value corresponding to the current time frame, a value range of the target value is the same as a gray value range, and the value range of the target value is uniformly distributed in the preset time range from small to large and is in one-to-one correspondence with each time frame in the time range;
step 702, performing gray processing on the first image to determine a gray value corresponding to a pixel in the first image;
step 703, for at least one target pixel in the first image, comparing the gray value corresponding to the target pixel with the target value corresponding to the current time frame to obtain a comparison result; and
step 704, rendering the gradient switching effect of switching from the first image to the target image according to the comparison result.

In the present embodiment, after the time range is determined, the target value may be set based on the time range. For each time frame in the time range, a different target value is set correspondingly. The numerical range of the target value is the same as the range of the gray value, and the numerical ranges of the target value are uniformly distributed in the preset time range from small to large. For example, the target value for the current time frame may be 0.25, and the target value for the next time frame may be 0.26.

For a current time frame in the preset time range, a target value corresponding to the current time frame is determined. The gray processing is performed on the first image to determine a gray value corresponding to a pixel in the first image. for at least one target pixel in the first image, the gray value corresponding to the target pixel is compared with the target value corresponding to the current time frame to obtain a comparison result. The gradient switching effect of switching from the first image to the target image is rendered according to the comparison result.

As the time frame changes, the target value also changes. So that the comparison of the gray value with the target value also changes. The gradient rendering effect of switching from the first image to the target image can be realized then.

Further, on the basis of any of the above embodiments, the rendering the gradient switching effect of switching from the first image to the target image according to the comparison result includes:
if the gray value of the target pixel is smaller than the target value, rendering the target pixel in the first image on a rendering canvas; and
if the gray value of the target pixel value is larger than the target value, rendering pixels matched with the target pixels in the target image on a rendering canvas, and presenting a gradient switching effect of switching from the first image to the target image.

In this embodiment, after the comparison result is obtained, if the gray value of the target pixel is smaller than the target value, the target pixel in the first image is rendered on the rendering canvas. If the gray value of the target pixel value is larger than the target value, pixels matched with the target pixels in the target image are rendered on the rendering canvas, and the gradient switching effect of switching from the first image to the target image is presented.

For example, if a pixel has a gray value of 0.25 while the target value is 0.26, the gray value is less than the target value, and the pixel in the first image can be rendered. If a pixel has a gray value of 0.27 while the target value is 0.26, the gray value is greater than the target value, and the pixel in the target image can be rendered.

According to the image processing method provided by the embodiment, by presetting the target values corresponding to the time frames, for different time frames, the gray values corresponding to the pixels can be compared with the target values corresponding to the current time frame to determine the rendering of the first image or the rendering of the target image, the display effect of gradient switching is achieved, and the user experience is improved.

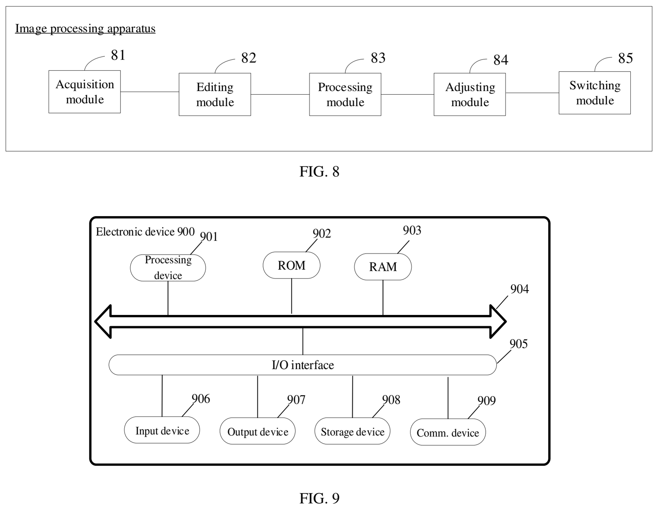

Fig. 8 is a schematic structural diagram of an image processing apparatus according to an embodiment of the present disclosure, and as shown in Fig. 8, the apparatus includes: an acquisition module 81, an editing module 82, a processing module 83, an adjusting module 84, and a switching module 85. The acquisition module 81 is configured to acquire a first image with a first preset size in response to an image processing operation triggered by a user. The editing module 82 is configured to adjust a size of the first image to a second preset size matched with a preset image processing algorithm to obtain a second image. The processing module 83 is configured to perform the image processing operation on the second image based on the image processing algorithm to obtain a third image. The adjusting module 84 is configured to adjust a size of the third image to the first preset size to obtain a target image. The switching module 85 is configured to render a gradient switching effect of switching from the first image to the target image on a rendering canvas with the first preset size.

In addition, based on any of the above embodiments, the acquisition module is configured to: acquire an original image generated by the user in response to the image processing operation triggered by a user; determine size information of the original image; and adjust the size of the original image by adopting an image size adjustment mode matched with the size information according to the size information to obtain the first image with the first preset size.

In addition, based on any of the above embodiments, the acquisition module is configured to: if the size information is smaller than a preset target size threshold, adjust the size of the original image in a cropping mode to obtain the first image with the first preset size; and if the size information is larger than the preset target size threshold, adjust the size of the original image in a filling mode to obtain the first image with the first preset size.

In addition, based on any of the above embodiments, the acquisition module is configured to: stretch a width or a height of the original image to a width or a height matched with the target size threshold value to obtain a stretched original image; and perform cropping operation on the height or the width of the stretched original image, which is not matched with the target size threshold value, to obtain the first image with the first preset size.

In addition, based on any of the above embodiments, the acquisition module is configured to: stretch the width or the height of the original image to the width or the height matched with the target size threshold value to obtain a stretched original image; and fill part of the height or the width which is not matched with the target size threshold value in the stretched original image by preset pixels to obtain the first image with the first preset size.

In addition, based on any of the above embodiments, the editing module is configured to edit the first image into the second image with the second preset size by adding preset pixels at an edge of the first image, and the adjusting module is configured to perform cropping operation on preset pixels in the third image to obtain the target image.

In addition, based on any of the above embodiments, the processing module is configured to: perform feature recognition operation on the second image to obtain feature information corresponding to the second image; send the second image and the feature information to an image processing side to cause the image processing side to perform image processing on the second image by adopting the image processing algorithm based on the feature information; and acquire the third image sent by the image processing side.

In addition, based on any of the above embodiments, the apparatus further includes: a splicing module, configured to splice the original image with any size and the target image to obtain a spliced image in response to an image storage request triggered by the user; and a storage module configured to store the spliced image.

In addition, based on any of the above embodiments, the splicing module is configured to: if the first preset size of the original image is smaller than a preset size proportion, transversely splice the original image and the target image to obtain the spliced image; and if the first preset size of the original image is larger than the preset size proportion, respectively perform cropping operation on the original image and the target image according to the preset size proportion, and longitudinally splice the cropped original image and the target image to obtain the spliced image.

In addition, based on any of the above embodiments, the switching module is configured to render the gradient switching effect of switching from the first image to the target image on the rendering canvas with the first preset size in a preset time range.

In addition, based on any of the above embodiments, the switching module is configured to: for a current time frame in the preset time range, determine a target value corresponding to the current time frame, a value range of the target value is the same as a gray value range, and the value range of the target value is uniformly distributed in the preset time range from small to large and is in one-to-one correspondence with each time frame in the time range; perform gray processing on the first image to determine a gray value corresponding to a pixel in the first image; for at least one target pixel in the first image, compare the gray value corresponding to the target pixel with the target value corresponding to the current time frame to obtain a comparison result; and render the gradient switching effect of switching from the first image to the target image according to the comparison result.

In addition, based on any of the above embodiments, the switching module is configured to: if the gray value of the target pixel is smaller than the target value, render the target pixel in the first image on a rendering canvas; and if the gray value of the target pixel value is larger than the target value, render pixels matched with the target pixels in the target image on a rendering canvas, and presenting a gradient switching effect of switching from the first image to the target image.

The apparatus provided in this embodiment can be used to implement the technical solution of the above method embodiment, and its implementation principle and technical effect are similar, so the details of this embodiment are not repeated here.

In order to realize the above embodiment, the embodiment of the present disclosure also provides an electronic device, which includes a processor and a memory;
the memory stores computer execution instructions;
the processor executes the computer-executable instructions stored by the memory to cause the processor to implement the image processing method according to any of the above embodiments.

Fig. 9 is a schematic structural diagram of an electronic device according to an embodiment of the present disclosure and referring to Fig. 9, the electronic device can be a terminal device or a server. The terminal device can include, but is not limited to, a mobile terminal such as a mobile phone, a notebook computer, a digital broadcast receiver, a PDA (personal digital assistant), a PAD (Portable Android Device), a PMP (portable media player), a vehicle terminal (e.g., a car navigation terminal), and the like, and a fixed terminal such as a digital TV, a desktop computer, and the like. The electronic device shown in Fig. 9 is only an example, and should not bring any limitation to the functions and the scope of use of the embodiments of the present disclosure.

As shown in Fig. 9, electronic device 900 can include a processing device (e.g., central processing unit, graphics processor, etc.) 901 that can perform various appropriate actions and processes in accordance with a program stored in a read-only memory (ROM) 902 or a program loaded from a storage device 908 into a random access memory (RAM) 903. In the RAM 903, various programs and data necessary for the operation of the electronic device 900 are also stored. The processing device 901, the ROM 902, and the RAM 903 are connected to each other through a bus 904. An input/output (I/O) interface 905 is also connected to bus 904.

Generally, the following devices can be connected to the I/O interface 905: input device 906 including, for example, a touch screen, a touch pad, a keyboard, mouse, a camera, a microphone, accelerometer, gyroscope and the like; an output device 907 including, for example, a Liquid Crystal Display (LCD), a speaker, a vibrator, and the like; storage device 908 including, for example, magnetic tape, hard disk and the like; and a communication device (Comm. device) 909. The communication device 909 can allow the electronic device 900 to communicate with other devices, either wirelessly or by wire, to exchange data. While Fig. 9 illustrates an electronic device 900 having various means, it is to be understood that not all illustrated means are required to be implemented or provided. More or fewer devices can be alternatively implemented or provided.

In particular, the processes described above with reference to the flow diagrams can be implemented as computer software programs, according to embodiments of the present disclosure. For example, embodiments of the present disclosure include a computer program product including a computer program carried on a nontransitory computer readable medium, the computer program containing program code for performing the method illustrated by the flow chart. In such an embodiment, the computer program can be downloaded and installed from a network via the communication device 909, or installed from the storage device 908, or installed from the ROM 902. The computer program, when executed by the processing device 901, performs the above-described functions defined in the methods of the embodiments of the present disclosure.

It should be noted that the computer readable medium of the present disclosure can be a computer readable signal medium or a computer readable storage medium or any combination of the two. A computer readable storage medium can be, for example, but not limited to, an electronic, magnetic, optical, electromagnetic, infrared, or semiconductor system, apparatus, or device, or any combination of the foregoing. More specific examples of the computer readable storage medium can include, but are not limited to: an electrical connection having one or more wires, a portable computer diskette, a hard disk, a random access memory (RAM), a read-only memory (ROM), an erasable programmable read-only memory (EPROM or flash memory), an optical fiber, a portable compact disc read-only memory (CD-ROM), an optical storage device, a magnetic storage device, or any suitable combination of the foregoing. In the present disclosure, a computer readable storage medium can be any tangible medium that can contain, or store a program for use by or in connection with an instruction execution system, apparatus, or device. In contrast, in the present disclosure, a computer readable signal medium can include a propagated data signal with computer readable program code embodied therein, for example, in baseband or as part of a carrier wave. Such a propagated data signal can take any of a variety of forms, including, but not limited to, electro-magnetic, optical, or any suitable combination thereof. A computer readable signal medium can be any computer readable medium that is not a computer readable storage medium and that can communicate, propagate, or transport a program for use by or in connection with an instruction execution system, apparatus, or device. Program code embodied on a computer readable medium can be transmitted using any appropriate medium, including but not limited to: electrical wires, optical cables, radio frequency (RF) and so forth, or any suitable combination of the foregoing.

In order to realize the above embodiment, the embodiment of the present disclosure also provides a computer-readable storage medium having stored therein computer-executable instructions which, when executed by a processor, implement the image processing method according to any of the above embodiments.

In order to realize the above embodiment, the embodiment of the present disclosure also provides a computer program product including a computer program, and the computer program when executed by a processor implements the image processing method according to any of the above embodiments.

In order to realize the above embodiment, the embodiment of the present disclosure also provides a computer program, and the computer program, when executed by a processor, implements the image processing method according to any of the above embodiments.

The computer readable medium can be embodied in the electronic device or can be separate and not incorporated into the electronic device.

The computer readable medium carries one or more programs which, when executed by the electronic device, cause the electronic device to implement the image processing method according to any of the above embodiments.

Computer program code for carrying out operations for aspects of the present disclosure can be written in any combination of one or more programming languages, including but not limited to an object oriented programming language such as Java, Smalltalk, C++, including conventional procedural programming languages, such as the "C" programming language or similar programming languages. The program code can execute entirely on the user's computer, partly on the user's computer, as a stand-alone software package, partly on the user's computer and partly on a remote computer or entirely on the remote computer or server. In the latter scenario, the remote computer can be connected to the user's computer through any type of network, including a Local Area Network (LAN) or a Wide Area Network (WAN), or the connection can be made to an external computer (for example, through the Internet using an Internet service provider).

The flowchart and block diagrams in the figures illustrate the architecture, functionality, and operation of possible implementations of systems, methods and computer program products according to various embodiments of the present disclosure. In this regard, each block in the flowchart or block diagrams can represent a module, a segment of program, or a portion of code, which includes one or more executable instructions for implementing the specified logical function. It should also be noted that, in some alternative implementations, the functions noted in the block can occur out of the order noted in the figures. For example, two blocks shown in succession can, in fact, be executed substantially concurrently, or the blocks can sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts, or combinations of special purpose hardware and computer instructions.

The units described in the embodiments of the present disclosure can be implemented by software or hardware. The name of a unit does not in some cases constitute a limitation of the unit itself.

The functions described herein above can be performed, at least in part, by one or more hardware logic components. For example, without limitation, exemplary types of hardware logic components that can be used include: field Programmable Gate Arrays (FPGA), Application Specific Integrated Circuits (ASIC), Application Specific Standard Products (ASSP), system on a chip (SOC), Complex Programmable Logic Devices (CPLD), and the like.

In the context of this disclosure, a machine-readable medium can be a tangible medium that can contain, or store a program for use by or in connection with an instruction execution system, apparatus, or device. The machine-readable medium can be a machine-readable signal medium or a machine-readable storage medium. A machine-readable medium can include, but is not limited to, an electronic, magnetic, optical, electromagnetic, infrared, or semiconductor system, apparatus, or device, or any suitable combination of the foregoing. More specific examples of a machine-readable storage medium would include an electrical connection based on one or more wires, a portable computer diskette, a hard disk, a random access memory (RAM), a read-only memory (ROM), an erasable programmable read-only memory (EPROM or flash memory), an optical fiber, a portable compact disc read-only memory (CD-ROM), an optical storage device, a magnetic storage device, or any suitable combination of the foregoing.

In one aspect, according to one or more embodiments of the present disclosure, an image processing method is provided and the method includes:
acquiring a first image with a first preset size in response to an image processing operation triggered by a user;
adjusting a size of the first image to a second preset size matched with a preset image processing algorithm to obtain a second image;
performing the image processing operation on the second image based on the image processing algorithm to obtain a third image;
adjusting a size of the third image to the first preset size to obtain a target image; and
rendering a gradient switching effect of switching from the first image to the target image on a rendering canvas with the first preset size.

According to one or more embodiments of the present disclosure, the acquiring a first image with a first preset size in response to an image processing operation triggered by a user includes:
acquiring an original image generated by the user in response to the image processing operation triggered by a user;
determining size information of the original image; and
adjusting the size of the original image by adopting an image size adjustment mode matched with the size information according to the size information to obtain the first image with the first preset size.

According to one or more embodiments of the present disclosure, the adjusting the size of the original image by adopting an image size adjustment mode matched with the size information according to the size information to obtain the first image with the first preset size includes:
if the size information is smaller than a preset target size threshold, adjusting the size of the original image in a cropping mode to obtain the first image with the first preset size; and
if the size information is larger than the preset target size threshold, adjusting the size of the original image in a filling mode to obtain the first image with the first preset size.

According to one or more embodiments of the present disclosure, the adjusting the size of the original image in a cropping mode to obtain the first image with the first preset size includes:
stretching a width or a height of the original image to a width or a height matched with the target size threshold value to obtain a stretched original image; and
performing cropping operation on the height or the width of the stretched original image, which is not matched with the target size threshold value, to obtain the first image with the first preset size.

According to one or more embodiments of the present disclosure, the adjusting the size of the original image in a filling mode to obtain the first image with the first preset size includes:
stretching the width or the height of the original image to the width or the height matched with the target size threshold value to obtain a stretched original image; and
filling part of the height or the width which is not matched with the target size threshold value in the stretched original image by preset pixels to obtain the first image with the first preset size.

According to one or more embodiments of the present disclosure, the adjusting a size of the first image to a second preset size matched with a preset image processing algorithm to obtain a second image includes:
editing the first image into the second image with the second preset size by adding preset pixels at an edge of the first image;
the adjusting a size of the third image to the first preset size to obtain a target image includes:
   performing cropping operation on preset pixels in the third image to obtain the target image.

According to one or more embodiments of the present disclosure, the performing the image processing operation on the second image based on the image processing algorithm to obtain a third image includes:
performing feature recognition operation on the second image to obtain feature information corresponding to the second image;
sending the second image and the feature information to an image processing side to cause the image processing side to perform image processing on the second image by adopting the image processing algorithm based on the feature information; and
acquiring the third image sent by the image processing side.

According to one or more embodiments of the present disclosure, after the rendering a gradient switching effect of switching from the first image to the target image on a rendering canvas with the first preset size, the method further includes:
splicing the original image with any size and the target image to obtain a spliced image in response to an image storage request triggered by the user; and
storing the spliced image.

According to one or more embodiments of the present disclosure, the splicing the original image with any size and the target image to obtain a spliced image includes:
if the first preset size of the original image is smaller than a preset size proportion, transversely splicing the original image and the target image to obtain the spliced image; and
if the first preset size of the original image is larger than the preset size proportion, respectively performing cropping operation on the original image and the target image according to the preset size proportion, and longitudinally splicing the cropped original image and the target image to obtain the spliced image.

According to one or more embodiments of the present disclosure, the rendering a gradient switching effect of switching from the first image to the target image on a rendering canvas with the first preset size includes:
rendering the gradient switching effect of switching from the first image to the target image on the rendering canvas with the first preset size in a preset time range.

According to one or more embodiments of the present disclosure, the rendering the gradient switching effect of switching from the first image to the target image on the rendering canvas with the first preset size in a preset time range includes:
for a current time frame in the preset time range, determining a target value corresponding to the current time frame, a value range of the target value is the same as a gray value range, and the value range of the target value is uniformly distributed in the preset time range from small to large and is in one-to-one correspondence with each time frame in the time range;
performing gray processing on the first image to determine a gray value corresponding to a pixel in the first image;
for at least one target pixel in the first image, comparing the gray value corresponding to the target pixel with the target value corresponding to the current time frame to obtain a comparison result; and
rendering the gradient switching effect of switching from the first image to the target image according to the comparison result.

According to one or more embodiments of the present disclosure, the rendering the gradient switching effect of switching from the first image to the target image according to the comparison result includes:
if the gray value of the target pixel is smaller than the target value, rendering the target pixel in the first image on a rendering canvas; and
if the gray value of the target pixel value is larger than the target value, rendering pixels matched with the target pixels in the target image on a rendering canvas, and presenting a gradient switching effect of switching from the first image to the target image.

In another aspect, according to one or more embodiments of the present disclosure, an image processing apparatus is provided and includes:
an acquisition module configured to acquire a first image with a first preset size in response to an image processing operation triggered by a user;
an editing module configured to adjust a size of the first image to a second preset size matched with a preset image processing algorithm to obtain a second image;
a processing module configured to perform the image processing operation on the second image based on the image processing algorithm to obtain a third image;
an adjusting module configured to adjust a size of the third image to the first preset size to obtain a target image; and
a switching module configured to render a gradient switching effect of switching from the first image to the target image on a rendering canvas with the first preset size.

According to one or more embodiments of the present disclosure, the acquisition module is configured to:
acquire an original image generated by the user in response to the image processing operation triggered by a user;
determine size information of the original image; and
adjust the size of the original image by adopting an image size adjustment mode matched with the size information according to the size information to obtain the first image with the first preset size.

According to one or more embodiments of the present disclosure, the acquisition module is configured to:
if the size information is smaller than a preset target size threshold, adjust the size of the original image in a cropping mode to obtain the first image with the first preset size; and
if the size information is larger than the preset target size threshold, adjust the size of the original image in a filling mode to obtain the first image with the first preset size.

According to one or more embodiments of the present disclosure, the acquisition module is configured to:
stretch a width or a height of the original image to a width or a height matched with the target size threshold value to obtain a stretched original image; and
perform cropping operation on the height or the width of the stretched original image, which is not matched with the target size threshold value, to obtain the first image with the first preset size.

According to one or more embodiments of the present disclosure, the acquisition module is configured to:
stretch the width or the height of the original image to the width or the height matched with the target size threshold value to obtain a stretched original image; and
fill part of the height or the width which is not matched with the target size threshold value in the stretched original image by preset pixels to obtain the first image with the first preset size.

According to one or more embodiments of the present disclosure, the editing module is configured to edit the first image into the second image with the second preset size by adding preset pixels at an edge of the first image, and
the adjusting module is configured to perform cropping operation on preset pixels in the third image to obtain the target image.

According to one or more embodiments of the present disclosure, the processing module is configured to:
perform feature recognition operation on the second image to obtain feature information corresponding to the second image;
send the second image and the feature information to an image processing side to cause the image processing side to perform image processing on the second image by adopting the image processing algorithm based on the feature information; and
acquire the third image sent by the image processing side.

According to one or more embodiments of the present disclosure, the apparatus further includes:
a splicing module, configured to splice the original image with any size and the target image to obtain a spliced image in response to an image storage request triggered by the user; and
a storage module configured to store the spliced image.

In addition, based on any of the above embodiments, the splicing module is configured to:
if the first preset size of the original image is smaller than a preset size proportion, transversely splice the original image and the target image to obtain the spliced image; and
if the first preset size of the original image is larger than the preset size proportion, respectively perform cropping operation on the original image and the target image according to the preset size proportion, and longitudinally splice the cropped original image and the target image to obtain the spliced image.

In addition, based on any of the above embodiments, the switching module is configured to:
render the gradient switching effect of switching from the first image to the target image on the rendering canvas with the first preset size in a preset time range.

According to one or more embodiments of the present disclosure, the switching module is configured to:
for a current time frame in the preset time range, determine a target value corresponding to the current time frame, a value range of the target value is the same as a gray value range, and the value range of the target value is uniformly distributed in the preset time range from small to large and is in one-to-one correspondence with each time frame in the time range;
perform gray processing on the first image to determine a gray value corresponding to a pixel in the first image;
for at least one target pixel in the first image, compare the gray value corresponding to the target pixel with the target value corresponding to the current time frame to obtain a comparison result; and
render the gradient switching effect of switching from the first image to the target image according to the comparison result.

According to one or more embodiments of the present disclosure, the switching module is configured to:
if the gray value of the target pixel is smaller than the target value, render the target pixel in the first image on a rendering canvas; and
if the gray value of the target pixel value is larger than the target value, render pixels matched with the target pixels in the target image on a rendering canvas, and presenting a gradient switching effect of switching from the first image to the target image.

In another aspect, according to one or more embodiments of the present disclosure, an electronic device is provided and includes: at least one processor and a memory;
the memory stores computer execution instructions;
the processor executes the computer-executable instructions stored by the memory to cause the processor to implement the image processing method as described in the above aspect and various possible designs in this aspect.

In another aspect, according to one or more embodiments of the present disclosure, a computer-readable storage medium is provided and has stored therein computer-executable instructions which, when executed by a processor, implement the image processing method as described in the above aspect and various possible designs in this aspect.

In another aspect, according to one or more embodiments of the present disclosure, a computer program product is provided and includes a computer program, and the computer program when executed by a processor implements the image processing method as described in the above aspect and various possible designs in this aspect.

The above description is only the preferred embodiment of the present disclosure and the explanation of the applied technical principles. It should be understood by those skilled in the art that the disclosure scope involved in this disclosure is not limited to the technical scheme formed by the specific combination of the above technical features, but also covers other technical schemes formed by any combination of the above technical features or their equivalent features without departing from the above disclosure concept. For example, the above features are replaced with (but not limited to) technical features with similar functions disclosed in this disclosure.

Furthermore, although the operations are depicted in a particular order, this should not be understood as requiring that these operations be performed in the particular order shown or in a sequential order. Under certain circumstances, multitasking and parallel processing may be beneficial. Likewise, although several specific implementation details are contained in the above discussion, these should not be construed as limiting the scope of the present disclosure. Some features described in the context of separate embodiments can also be combined in a single embodiment. On the contrary, various features described in the context of a single embodiment can also be implemented in multiple embodiments individually or in any suitable sub-combination.

Although the subject matter has been described in language specific to structural features and/or methodological logical acts, it should be understood that the subject matter defined in the appended claims is not necessarily limited to the specific features or acts described above. On the contrary, the specific features and actions described above are only exemplary forms of implementing the claims.

## Claims

1. An image processing method, comprising:
acquiring a first image with a first preset size in response to an image processing operation triggered by a user;
adjusting a size of the first image to a second preset size matched with a preset image processing algorithm to obtain a second image;
performing the image processing operation on the second image based on the image processing algorithm to obtain a third image;
adjusting a size of the third image to the first preset size to obtain a target image; and
rendering a gradient switching effect of switching from the first image to the target image on a rendering canvas with the first preset size.

2. The method according to claim 1, wherein the acquiring a first image with a first preset size in response to an image processing operation triggered by a user comprises:
acquiring an original image generated by the user in response to the image processing operation triggered by a user;
determining size information of the original image; and
adjusting the size of the original image by adopting an image size adjustment mode matched with the size information according to the size information to obtain the first image with the first preset size.

3. The method according to claim 2, wherein the adjusting the size of the original image by adopting an image size adjustment mode matched with the size information according to the size information to obtain the first image with the first preset size comprises:
if the size information is smaller than a preset target size threshold, adjusting the size of the original image in a cropping mode to obtain the first image with the first preset size; and
if the size information is larger than the preset target size threshold, adjusting the size of the original image in a filling mode to obtain the first image with the first preset size.

4. The method according to claim 3, wherein the adjusting the size of the original image in a cropping mode to obtain the first image with the first preset size comprises:
stretching a width or a height of the original image to a width or a height matched with the target size threshold value to obtain a stretched original image; and
performing cropping operation on the height or the width of the stretched original image, which is not matched with the target size threshold value, to obtain the first image with the first preset size.

5. The method according to claim 3 or 4, wherein the adjusting the size of the original image in a filling mode to obtain the first image with the first preset size comprises:
stretching a width or a height of the original image to a width or a height matched with the target size threshold value to obtain a stretched original image; and
filling part of the height or the width which is not matched with the target size threshold value in the stretched original image by preset pixels to obtain the first image with the first preset size.

6. The method according to any one of claims 1-5, wherein the adjusting a size of the first image to a second preset size matched with a preset image processing algorithm to obtain a second image comprises:
editing the first image into the second image with the second preset size by adding preset pixels at an edge of the first image;
the adjusting a size of the third image to the first preset size to obtain a target image comprises:
performing cropping operation on preset pixels in the third image to obtain the target image.

7. The method according to any one of claims 1-6, wherein the performing the image processing operation on the second image based on the image processing algorithm to obtain a third image comprises:
performing feature recognition operation on the second image to obtain feature information corresponding to the second image;
sending the second image and the feature information to an image processing side to cause the image processing side to perform image processing on the second image by adopting the image processing algorithm based on the feature information; and
acquiring the third image sent by the image processing side.

8. The method according to any one of claims 1-7, wherein after the rendering a gradient switching effect of switching from the first image to the target image on a rendering canvas with the first preset size, the method further comprises:
splicing the original image with any size and the target image to obtain a spliced image in response to an image storage request triggered by the user; and
storing the spliced image.

9. The method according to claim 8, wherein the splicing the original image with any size and the target image to obtain a spliced image comprises:
if the first preset size of the original image is smaller than a preset size proportion, transversely splicing the original image and the target image to obtain the spliced image; and
if the first preset size of the original image is larger than the preset size proportion, respectively performing cropping operation on the original image and the target image according to the preset size proportion, and longitudinally splicing the cropped original image and the target image to obtain the spliced image.

10. The method according to any one of claims 1-9, wherein the rendering a gradient switching effect of switching from the first image to the target image on a rendering canvas with the first preset size comprises:
rendering the gradient switching effect of switching from the first image to the target image on the rendering canvas with the first preset size in a preset time range.

11. The method according to claim 10, wherein the rendering the gradient switching effect of switching from the first image to the target image on the rendering canvas with the first preset size in a preset time range comprises:
for a current time frame in the preset time range, determining a target value corresponding to the current time frame, wherein a value range of the target value is the same as a gray value range, the value range of the target value is uniformly distributed in the preset time range from small to large and is in one-to-one correspondence with each time frame in the time range;
performing gray processing on the first image to determine a gray value corresponding to a pixel in the first image;
for at least one target pixel in the first image, comparing the gray value corresponding to the target pixel with the target value corresponding to the current time frame to obtain a comparison result; and
rendering the gradient switching effect of switching from the first image to the target image according to the comparison result.

12. The method according to claim 11, wherein the rendering the gradient switching effect of switching from the first image to the target image according to the comparison result comprises:
if the gray value of the target pixel is smaller than the target value, rendering the target pixel in the first image on a rendering canvas; and
if the gray value of the target pixel value is larger than the target value, rendering pixels matched with the target pixels in the target image on a rendering canvas, and presenting a gradient switching effect of switching from the first image to the target image.

13. An image processing apparatus comprising:
an acquisition module configured to acquire a first image with a first preset size in response to an image processing operation triggered by a user;
an editing module configured to adjust a size of the first image to a second preset size matched with a preset image processing algorithm to obtain a second image;
a processing module configured to perform the image processing operation on the second image based on the image processing algorithm to obtain a third image;
an adjusting module configured to adjust a size of the third image to the first preset size to obtain a target image; and
a switching module configured to render a gradient switching effect of switching from the first image to the target image on a rendering canvas with the first preset size.

14. An electronic device, comprising: a processor and a memory;
the memory stores computer execution instructions;
the processor executes the computer-executable instructions stored by the memory to cause the processor to implement the image processing method according to any of claims 1 to 12.

15. A computer-readable storage medium having stored therein computer-executable instructions which, when executed by a processor, implement the image processing method according to any of claims 1 to 12.

16. A computer program product comprising a computer program, wherein the computer program when executed by a processor implements the image processing method according to any of claims 1 to 12.

17. A computer program, wherein the computer program, when executed by a processor, implements the image processing method according to any of claims 1 to 12.
